Europäisches Patentamt

European Patent Office

Office européen des brevets

(19)

(11) **EP 1 255 658 B1**

(12) **EUROPÄISCHE PATENTSCHRIFT**

(45) Veröffentlichungstag und Bekanntmachung des Hinweises auf die Patenterteilung:
**15.06.2005 Patentblatt 2005/24**

(21) Anmeldenummer: **01902372.0**

(22) Anmeldetag: **31.01.2001**

(51) Int Cl.$^7$: **B60K 31/00**

(86) Internationale Anmeldenummer:
**PCT/EP2001/001028**

(87) Internationale Veröffentlichungsnummer:
**WO 2001/056825 (09.08.2001 Gazette 2001/32)**

(54) **VERFAHREN ZUR GESCHWINDIGKEITS- UND ABSTANDSREGELUNG EINES KRAFTFAHRZEUGES**

METHOD FOR CONTROLLING THE SPEED AND DISTANCE OF A MOTOR VEHICLE

PROCEDE DE REGULATION DE LA VITESSE D'UN VEHICULE ET DE SA DISTANCE PAR RAPPORT A UN VEHICULE QUI LE PRECEDE

(84) Benannte Vertragsstaaten:
**DE ES FR GB IT**

(30) Priorität: **02.02.2000 DE 10004527**

(43) Veröffentlichungstag der Anmeldung:
**13.11.2002 Patentblatt 2002/46**

(73) Patentinhaber: **Volkswagen Aktiengesellschaft
38436 Wolfsburg (DE)**

(72) Erfinder:
 • **ANDREAS, Peter
 38518 Gifhorn (DE)**
 • **RUCHATZ, Thomas
 38165 Lehre (DE)**
 • **BÄKER, Wolfgang
 38114 Braunschweig (DE)**
 • **RABBA, Heiko
 38102 Braunschweig (DE)**

(74) Vertreter: **Meyer, Enno, Dr.
c/o Jung HML
Patent- und Rechtsanwälte
Schraudolphstrasse 3
80799 München (DE)**

(56) Entgegenhaltungen:
**EP-A- 0 484 995      EP-A- 0 897 824
WO-A-99/20481       DE-A- 19 543 551
DE-A- 19 729 613**

EP 1 255 658 B1

**Beschreibung**

Die Erfindung betrifft ein Verfahren zur Regelung der Geschwindigkeit eines Kraftfahrzeuges und des Abstandes des Kraftfahrzeuges zu mindestens einem vorausfahrenden Kraftfahrzeug, bei dem mit Hilfe einer einen. Abstandssensor aufweisenden Erfassungseinrichtung zumindest die Geschwindigkeit des Kraftfahrzeuges und der Abstand zu dem vorausfahrenden Kraftfahrzeug bestimmt werden und bei dem bei einer Abweichung des erfaßten Abstandes a von einem Folgesollabstand die Fahrgeschwindigkeit angepaßt wird.

Aus der DE 196 47 430 A ist ein Verfahren und eine Bremsvorrichtung zum selbsttätigen Bremsen eines personengeführten Kraftfahrzeugs bekannt. Dabei wird die Relativgeschwindigkeit zu einem sich etwa in Fahrtrichtung vor dem Fahrzeug befindenden Hindernis und der Abstand zwischen Fahrzeug und Hindernis ermittelt. Der ermittelte Abstand wird mit einem Bremsweg des Fahrzeugs bei einer Geschwindigkeit verglichen, die etwa der Relativgeschwindigkeit entspricht. Abhängig vom Vergleichsergebnis wird ein selbsttätiger Bremsvorgang zumindest teilweise durchgeführt, wenn der ermittelte Abstand kleiner als der genannte Bremsweg ist.

Weiterhin ist aus der DE 197 29 613 A ein Fahrtunterstützungssystem für Fahrzeuge bekannt, durch das ein Fahrer darauf hingewiesen wird, seine Aufmerksamkeit auf ein vorausfahrendes Fahrzeug zu richten, wenn ein Fahrzeug sich dem vorausfahrenden Fahrzeug nähert und der Abstand zwischen diesen beiden Fahrzeugen kleiner wird als ein Fahrzeug-Sicherheitsabstand, wobei dieser Fahrzeug-Sicherheitsabstand gemäß Verkehrszuständen in zwei Stufen festgelegt wird. Eine Stufe entspricht einem Zustand geringer Verkehrsdichte, bei dem die Straße frei oder verkehrsarm bzw. wenig befahren ist, und die zweite Stufe entspricht einem Zustand hoher Verkehrsdichte, bei dem die Straße verkehrsreich bzw. stark befahren ist. Weil der Fahrzeug-Sicherheitsabstand im Zustand hoher Verkehrsdichte so festgelegt ist, daß er kleiner als derjenige für den Zustand geringer Verkehrsdichte, wird, wenn die Straße stark befahren ist, aufgrund des kleineren Fahrzeug-Sicherheitsabstands, eine häufige Ausgabe eines Warnsignals vermieden.

Dem zuvor genannten Verfahren zur Geschwindigkeits- und Abstandsregelung eines Kraftfahrzeuges liegt das Problem zugrunde, daß dann, wenn ein neues Ziel, also ein neues vorausfahrendes Kraftfahrzeug von der Erfassungseinrichtung erfaßt wird, die aus dem Stand der Technik bekannten Verfahren sofort mit der Abstandsregelung beginnen. Dabei wird außer acht gelassen, daß möglicherweise das neu erfaßte Ziel kein eigentliches Regelobjekt für das geregelte Kraftfahrzeug darstellt, weil das Regelobjekt auf einer anderen Fahrbahn fährt. Dieses tritt insbesondere bei Kurvenfahrten auf, bei denen das Kraftfahrzeug auf der Überholspur fährt und ein neues Regelobjekt erfaßt wird, das auf der rechten Fahrbahn fährt und nur wegen des Kurvenverlaufes in den Erfassungsbereich der Erfassungseinrichtung gelangt ist. Der vorliegenden Erfindung liegt daher das technische Problem zugrunde, ein Verfahren anzugeben, bei dem die Regelung der Geschwindigkeit und des Abstandes des Kraftfahrzeuges zu mindestens einem vorausfahrenden Kraftfahrzeug in einfacher und zugleich zuverlässiger Weise durchgeführt wird.

EP-A-0 484 995, EP-A-0 897 824 und WO 99/20481 A zeigen Verfahren zur Regelung der Geschwindigkeit eines Kraftfahrzeuges zu mindestens einem vorausfahrenden Kraftfahrzeug nach dem Oberbegriff des Anspruches 1.

Das zuvor aufgezeigte technische Problem ist erfindungsgemäß durch ein Verfahren gemäß Anspruch 1 dadurch gelöst, daß ein Interventionsabstand $a_i$ bestimmt wird, der kleiner als die Reichweite des Abstandssensors ist, und daß die Anpassung der Fahrgeschwindigkeit v bei einem Abstand a durchgeführt wird, der kleiner als der Interventionsabstand $a_i$ ist. Durch die Anwendung des beschriebenen Interventionsabstandes ist es möglich, daß, solange das neue Regelobjekt sich zwischen der Reichweite des Abstandssensors und dem Interventionsabstand befindet, das Regelobjekt zunächst beobachtet werden kann, um dessen Fahrverhalten zu ermitteln. Erst bei Unterschreiten des Interventionsabstandes findet dann die Abstandsregelung in üblicher Weise statt.

Dabei ist der maximale Interventionsabstand kleiner als 90%, vorzugsweise kleiner als 80%, insbesondere kleiner als 70% der Reichweite des Abstandssensors bestimmt. Somit liegt der Abstandsbereich, in dem das Regelobjekt lediglich beobachtet wird, ohne daß eine Regelung des Kraftfahrzeuges stattfindet, im Bereich zwischen 10 und 30% der Reichweite des Abstandssensors, so daß eine ausreichende Beobachtungszeit für alle Fahrsituationen gegeben ist.

Der Interventionsabstand wird in Abhängigkeit von der Relativgeschwindigkeit zwischen dem Kraftfahrzeug und einem vorausfahrenden Kraftfahrzeug bestimmt. Dem liegt die Erkenntnis zugrunde, daß für unterschiedliche Relativgeschwindigkeiten unterschiedlich lange Bremszeiten erforderlich sind, um das geregelte Kraftfahrzeug auf den gegebenen Sicherheitsabstand zu regeln. Große Relativgeschwindigkeiten benötigen eine größere Bremszeit, während kleinere Relativgeschwindigkeiten kleinere Bremszeiten benötigen.

Ferner wird der Interventionsabstand als stetig steigende Funktion der Relativgeschwindigkeit berechnet, wobei die Funktion eine nichtlineare Funktion ist. Dabei ist die Steigung für kleine Werte der Relativgeschwindigkeit größer als für große Relativgeschwindigkeiten ist. Letzteres wird der Erkenntnis gerecht, daß der Bremsweg aufgrund der quadratischen Abhängigkeit der Fahrenergie von der Fahrgeschwindigkeit überproportional mit der Relativgeschwindigkeit ansteigt.

Durch den beschriebenen nichtlinearen Verlauf der Funktion wird erreicht, daß gegenüber einer linearen Funktion für steigende Werte der Relativgeschwindigkeit eher größere Interventionsabstände errechnet werden.

Aufgrund derselben Überlegung, daß die Fahrenergie quadratisch mit der Fahrgeschwindigkeit ansteigt, werden in weiter bevorzugter Weise die Werte für den minimalen Interventionsabstand und den maximalen Interventionsabstand in Abhängigkeit von der Fahrgeschwindigkeit bestimmt.

Ebenso ist es möglich die Werte für den minimalen Interventionsabstand und den maximalen Interventionsabstand in Abhängigkeit von der Art der befahrenen Straße bestimmt werden. Dabei kann die Art der Straße vom Benutzer eingegeben werden oder anhand der Häufigkeit gefahrener Kurven pro Zeiteinheit oder anhand von Daten eines Positionierungssystems, vorzugsweises eines Global Positioning Systems (GPS) bestimmt. Da auf Autobahnen üblicherweise höhere Geschwindigkeiten gefahren werden, als es auf Landstraßen oder gar Stadtstraßen der Fall ist, können die Interventionsabstände in Abhängigkeit von der Art der befahrenen Straße bestimmt werden.

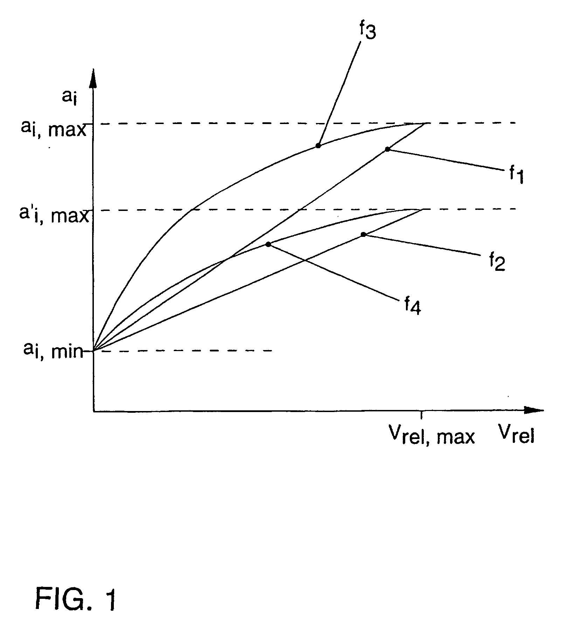

Die Erfindung wird im folgenden anhand eines Ausführungsbeispieles näher erläutert, wobei auf die beigefügte Zeichnung bezug genommen wird. In dieser zeigt die einzige Figur in Form eines Diagramms verschiedene Funktionsverläufe zur Berechnung des Interventionsabstandes.

In der Figur ist der Interventionsabstand $a_i$ gegenüber der Relativgeschwindigkeit $v_{rel}$ dargestellt. Mit gestrichelten Linien sind die Werte für den minimalen Interventionsabstand $a_{i,min}$ und zwei maximale Interventionsabstände $a_{i,max}$ und $a'_{i,max}$ dargestellt. Die Werte der maximalen Interventionsabstände $a_{i,max}$ und $a'_{i,max}$ sind kleiner als die Reichweite eines Abstandssensors der verwendeten Erfassungseinrichtung. Beispielsweise beträgt die Reichweite ca. 150 bis 200m. Wird nun ein Objekt neu vom Sensor erfaßt und liegt der gemessen Abstand zum Regelobjekt im Bereich der Reichweite des Sensors, so wird erfindungsgemäß zunächst das neue Regelobjekt beobachtet, bevor eine Abstandsregelung des Kraftfahrzeuges einsetzt. Dazu ist der Interventionsabstand $a_i$ vorgesehen, so daß die Regelung der Fahrgeschwindigkeit erst ab einem Abstand a durchgeführt wird, der kleiner als der Interventionsabstand $a_i$ ist. Wie die Figur zeigt, kann der Interventionsabstand $a_i$ als konstante Funktion bestimmt werden, wie mit den in dem Diagramm horizontal verlaufenden gestrichelten Linien für $a_{i,max}$ oder $a'_{i,max}$ dargestellt ist.

Die weiteren Kurven stellen Funktionen dar, mit deren Hilfe der Interventionsabstand $a_i$ in Abhängigkeit von der Relativgeschwindigkeit $v_{rel}$ bestimmt wird. Sämtliche der dargestellten Funktionen $f_1$ bis $f_4$ sind stetig steigende Funktionen $a_i(v_{rel})$.

Die Funktionen $f_1$ und $f_2$ sind lineare Funktionen die als

$$a_i(v_{rel}) = a_{i,min} + const \cdot v_{rel}$$

mit $a_{i,min}$ als minimaler Interventionsabstand berechnet werden. Die Funktionen $f_1$ und $f_2$ unterscheiden sich dabei lediglich durch unterschiedliche Werte für die Steigung und somit für den maximalen Interventionsabstand $a_{i,max}$.

Die Figuren $f_3$ und $f_4$ sind nichtlineare Funktionen, deren Steigungen für kleine Werte der Relativgeschwindigkeit $v_{rel}$ größer als für große Werte der Relativgeschwindigkeit $v_{rel}$ sind. Dadurch ergeben sich die Funktionsverläufe $f_3$ und $f_4$ die für kleinere Relativgeschwindigkeiten eine größere Steigung als die zugeordneten linearen Funktionen $f_1$ und $f_2$ aufweisen, während für größere Relativgeschwindigkeiten $v_{rel}$ die Steigungen kleiner als bei den linearen Funktionen $f_1$ und $f_2$ sind. Dieser Funktionsverlauf wird der Erkenntnis gerecht, daß bei großen Relativgeschwindigkeiten ein größerer Bremsweg erforderlich ist und daher größere Interventionsabstände als im Falle einer linearen Funktion bestimmt werden sollen.

In der Figur sind zwei verschiedene Werte für den maximalen Interventionsabstand $a_{i,max}$ und $a'_{i,max}$ dargestellt. Je geringer der maximale Interventionsabstand einer von der Relativgeschwindigkeit $v_{rel}$ abhängigen Funktion ist, desto größer ist der Abstandsbereich, in dem ein neu erfaßtes Regelobjekt beobachtet werden kann, bevor eine Abstandsregelung durchgeführt wird. Somit können unterschiedliche maximale aber auch minimale Interventionsabstände in Abhängigkeit von der Fahrgeschwindigkeit v bestimmt werden. Ebenso ist es möglich die minimalen und maximalen Interventionsabstände $a_{i,min}$ und $a_{i,max}$ in Abhängigkeit von der Art der befahrenen Straße zu bestimmen. Denn auf Autobahnen werden höhere mittlere Fahrgeschwindigkeiten als auf Landstraßen und insbesondere auf Stadtstraßen gefahren, so daß entsprechend modifizierte maximale und minimale Interventionsabstände $a_{i,min}$ und $a_{i,max}$ vorgegeben werden können. Die Art der Straße kann dabei von einem Benutzer angegeben werden oder sie wird anhand der Häufigkeit gefahrener Kurven pro Zeiteinheit oder anhand von Daten eines Positionierungssystems, vorzugsweise eine Global Positionings Systems (GPS) bestimmt.

**Patentansprüche**

1. Verfahren zur Regelung der Geschwindigkeit eines Kraftfahrzeuges und des Abstandes des Kraftfahrzeuges zu mindestens einem vorausfahrenden Kraftfahrzeug,
bei dem mit Hilfe einer einen Abstandssensor aufweisenden Erfassungseinrichtung zumindest die Geschwindigkeit (v) des Kraftfahrzeuges und der Abstand (a) zu dem vorausfahrenden Kraftfahrzeug bestimmt werden und bei dem bei einer Abweichung des erfaßten Abstandes (a) zu einem vorausfahrenden Kraftfahrzeug von einem Folgesollabstand ($a_s$) die Fahrgeschwindigkeit (v) des Kraftfahrzeuges angepaßt wird, wobei

ein Interventionsabstand ($a_i$) bestimmt wird, der kleiner als die Reichweite des Abstandssensors ist, wobei die Anpassung der Fahrgeschwindigkeit (v) bei einem Abstand (a) durchgeführt wird, der kleiner als der Interventionsabstand ($a_i$) ist und keine Anpassung der Fahrgeschwindigkeit (v) durchgeführt wird, wenn der Abstand (a) größer oder gleich dem Interventionsabstand ist,

**dadurch gekennzeichnet, daß**

die Relativgeschwindigkeit ($v_{rel}$) zwischen dem Kraftfahrzeug und dem vorausfahrenden Kraftfahrzeug ermittelt und der Interventionsabstand ($a_i$) als stetig steigende Funktion ($a_i(v_{rel})$) der Relativgeschwindigkeit ($v_{rel}$) bestimmt wird, wobei der Interventionsabstand ($a_i$) auf das Intervall ($a_{i,min}$) $\leq$ ($a_i$) $\leq$ ($a_{i,max}$) bestehend aus einem minimalen Interventionsabstand ($a_{i,min}$) und einem maximalen Interventionsabstand ($a_{i,max}$) begrenzt ist, und wobei

die Funktion $a_i(v_{rel})$ als nichtlineare Funktion berechnet wird, wobei die Steigung der nichtlinearen Funktion für kleine Werte der Relativgeschwindigkeit ($v_{rel}$) größer als für große Werte der Relativgeschwindigkeit ($v_{rel}$) ist.

2. Verfahren nach Anspruch 1, **dadurch gekennzeichnet, daß** der maximale Interventionsabstand ($a_{i,max}$) kleiner als 90%, vorzugsweise kleiner als 80%, insbesondere kleiner als 70% der Reichweite des Abstandssensors ist,

3. Verfahren nach einem der Ansprüche 1 oder 2, **dadurch gekennzeichnet, daß** die Werte für den minimalen Interventionsabstand ($a_{i,min}$) und den maximalen Interventionsabstand ($a_{i,max}$) in Abhängigkeit von der Fahrgeschwindigkeit (v) bestimmt werden.

4. Verfahren nach einem der Ansprüche 1 oder 2, **dadurch gekennzeichnet, daß** die Werte für den minimalen Interventionsabstand ($a_{i,min}$) und den maximalen Interventionsabstand ($a_{i,max}$) in Abhängigkeit von der Art der befahrenen Straße bestimmt werden.

5. Verfahren nach Anspruch 4, **dadurch gekennzeichnet, daß** die Art der Straße vom Benutzer eingegeben wird.

6. Verfahren nach Anspruch 4, **dadurch gekennzeichnet, daß** die Art der Straße anhand der Häufigkeit gefahrener Kurven pro Zeiteinheit bestimmt wird.

7. Verfahren nach Anspruch 4, **dadurch gekennzeichnet, daß** die Art der Straße anhand von Daten eines Positionierungssystems, vorzugsweise eines Global Positioning Systems (GPS) bestimmt wird.

## Claims

1. Method for controlling the speed of a motor vehicle and of the distance of the motor vehicle from at least one motor vehicle travelling in front, in which at least the speed (v) of the motor vehicle and the distance (a) from the motor vehicle travelling in front are determined using a sensing device which has a distance sensor, and in which, when there is a deviation between the sensed distanced (a) from a motor vehicle travelling in front and a set-point following distance ($a_s$), the travelling speed (v) of the motor vehicle is adapted, wherein

an intervention distance ($a_i$) which is shorter than the range of the distance sensor is determined, wherein the adaptation of the travelling speed (v) is carried out at a distance (a) which is shorter than the intervention distance ($a_i$) and the travelling speed (v) is not adapted if the distance (a) is more than or equal to the intervention distance, **characterized in that** the relative speed ($v_{rel}$) between the motor vehicle and the motor vehicle travelling in front is acquired and the intervention distance ($a_i$) is determined as a continuously rising function ($a_i(v_{rel})$) of the relative speed ($v_{rel}$), wherein the intervention distance ($a_i$) is limited to the interval ($a_{i,min}$) $\leq$ ($a_i$) $\leq$ ($a_{i,max}$) composed of a minimum intervention distance ($a_{i,min}$) and a maximum intervention distance ($a_{i,max}$), and wherein

the function $a_i(v_{rel})$ is calculated as a non-linear function, wherein the rise in the non-linear function is larger for small values of the relative speed ($v_{rel}$) than for large values of the relative speed ($v_{rel}$).

2. Method according to Claim 1, **characterized in that** the maximum intervention distance ($a_{i,max}$) is shorter than 90%, preferably shorter than 80%, in particular shorter than 70% of the range of the distance sensor.

3. Method according to one of Claims 1 or 2, **characterized in that** the values for the minimum intervention distance ($a_{i,min}$) and the maximum intervention distance ($a_{i,max}$) are determined as a function of the travelling speed (v).

4. Method according to one of Claims 1 or 2, **characterized in that** the values for the minimum intervention distance ($a_{i,min}$) and the maximum intervention distance ($a_{i,max}$) are determined as a function of the type of road travelled on.

**5.** Method according to Claim 4, **characterized in that** the type of road is input by the user.

**6.** Method according to Claim 4, **characterized in that** the type of road is determined by reference to the frequency of bends being travelled on per time unit.

**7.** Method according to Claim 4, **characterized in that** the type of road is determined with reference to data of a positioning system, preferably of a global positioning system (GPS).

**Revendications**

**1.** Procédé de régulation de la vitesse d'un véhicule automobile et de la distance du véhicule automobile par rapport à au moins un véhicule automobile qui le précède avec lequel au moins la vitesse (v) du véhicule automobile et la distance (a) par rapport au véhicule automobile qui le précède sont déterminées à l'aide d'un dispositif de détection qui présente un capteur de distance et avec lequel la vitesse de déplacement (v) du véhicule automobile est adaptée en cas d'écart entre la distance (a) détectée par rapport à un véhicule automobile qui précède et une distance de suivi de consigne ($a_s$), une distance d'intervention ($a_i$) qui est inférieure à la portée du détecteur de distance étant déterminée, l'adaptation de la vitesse de déplacement (v) étant effectuée à une distance (a) qui est inférieure à la distance d'intervention ($a_i$) et aucune adaptation de la vitesse de déplacement (v) n'étant effectuée lorsque la distance (a) est supérieure ou égale à la distance d'intervention, **caractérisé en ce que** la vitesse relative ($v_{rel}$) entre le véhicule automobile et le véhicule automobile qui le précède est déterminée et la distance d'intervention ($a_i$) est déterminée sous la forme d'une fonction à croissance constante ($a_i(v_{rel})$) de la vitesse relative ($v_{rel}$), la distance d'intervention ($a_i$) étant limitée à l'intervalle ($a_{i,min}$) ≤ ($a_i$) ≤ ($a_{i,max}$) composé d'une distance d'intervention minimale ($a_{i,min}$) et d'une distance d'intervention maximale ($a_{i,max}$), et la fonction $a_i(v_{rel})$ étant calculée sous la forme d'une fonction non linéaire, la pente de la fonction non linéaire étant plus grande pour les petites valeurs de la vitesse relative ($v_{rel}$) que pour les grandes valeurs de la vitesse relative ($v_{rel}$).

**2.** Procédé selon la revendication 1, **caractérisé en ce que** la distance d'intervention maximale ($a_{i,max}$) est inférieure à 90 %, de préférence inférieure à 80 %, notamment inférieure à 70 % de la portée du capteur de distance.

**3.** Procédé selon l'une des revendications 1 ou 2, **caractérisé en ce que** les valeurs pour la distance d'intervention minimale ($a_{i,min}$) et la distance d'intervention maximale ($a_{i,max}$) sont déterminées en fonction de la vitesse de déplacement (v).

**4.** Procédé selon l'une des revendications 1 ou 2, **caractérisé en ce que** les valeurs pour la distance d'intervention minimale ($a_{i,min}$) et la distance d'intervention maximale ($a_{i,max}$) sont déterminées en fonction de la nature de la route empruntée.

**5.** Procédé selon la revendication 4, **caractérisé en ce que** la nature de la route est saisie par l'utilisateur.

**6.** Procédé selon la revendication 4, **caractérisé en ce que** la nature de la route est déterminée au moyen de la fréquence des virages pris par unité de temps.

**7.** Procédé selon la revendication 4, **caractérisé en ce que** la nature de la route est déterminée au moyen de données d'un système de positionnement, de préférence un système de positionnement mondial (GPS).

FIG. 1